# EUROPEAN PATENT APPLICATION

(11) **EP 4 672 483 A1**
(43) Date of publication of application: **31.12.2025**
(21) Application number: 25165963.7
(22) Date of filing: 25.03.2025
(51) Int. Cl.: H01M 50/536, H01M 50/595

(54) **ELECTRODE PLATE FOR BATTERY AND MANUFACTURING METHOD THEREOF**

(30) Priority: 25.06.2024 KR 20240082760
(71) Applicant: SAMSUNG SDI CO., LTD., Yongin-si, Gyeonggi-do 17084 (KR)
(72) Inventor: KIM, SUNGHA, Yongin-Si Gyeonggi-do 17084 (KR)
(74) Representative: Gulde & Partner

(57) **Abstract**

An electrode plate for a battery includes: an electrode substrate; an electrode tab overlapping with a portion of the electrode substrate; a first insulating portion covering a portion of the electrode tab and a portion of the electrode substrate on a first surface, and including a plurality of first protrusions; and a second insulating portion covering a portion of the electrode tab and a portion of the electrode substrate on a second surface opposite to the first surface, and including a plurality of second protrusions.

## Description

### BACKGROUND

### 1. Field

Aspects of embodiments of the present disclosure relate to an electrode plate for a battery, and a manufacturing method of the electrode plate.

### 2. Description of Related Art

Unlike primary batteries that are not designed to be (re)charged, secondary (or rechargeable) batteries are batteries that are designed to be discharged and recharged. Low-capacity secondary batteries are used in portable, small electronic devices, such as smart phones, feature phones, notebook computers, digital cameras, and camcorders, while large-capacity secondary batteries are widely used as power sources for driving motors in hybrid vehicles and electric vehicles and for storing power (e.g., home and/or utility scale power storage). A secondary battery generally includes an electrode assembly composed of a positive electrode and a negative electrode, a case accommodating the same, and electrode terminals connected to the electrode assembly.

An electrode plate constituting an electrode assembly may include an active material coated layer, which is a region where an electrode active material is applied to an electrode substrate acting as a current collector, and an uncoated portion, which is a region where an electrode active material is not applied. One end of an electrode tab is integrally formed with or joined to the uncoated portion, and the other end of the electrode tab is connected to a terminal exposed to the outside. In this case, the electrode tab and the electrode substrate of the uncoated portion may be joined together through welding, and an insulating member may be attached to a welded portion between the electrode tab and the electrode substrate for insulation.

The above information disclosed in this Background section is for enhancement of understanding of the background of the present disclosure, and therefore, it may contain information that does not constitute related (or prior) art.

### SUMMARY

The insulating member may cause cracks to occur in the electrode substrate due to portions where a stress is higher than in other portions. Batteries manufactured using electrode plates with cracks may lead to serious quality defects, especially in lithium-ion secondary batteries.

Embodiments of the present disclosure may be directed to an electrode plate for a battery, and a manufacturing method of the electrode plate.

However, the technical problem to be solved by the present disclosure is not limited to the above problem, and other problems not mentioned herein, and aspects and features of the present disclosure that would address such problems, will be clearly understood by those skilled in the art from the description of the present disclosure below.

According to a first aspect of the present disclosure, an electrode plate for a battery includes: an electrode substrate; an electrode tab overlapping with a portion of the electrode substrate; a first insulating portion covering a portion of the electrode tab and a portion of the electrode substrate on a first surface, and including a plurality of first protrusions; and a second insulating portion covering a portion of the electrode tab and a portion of the electrode substrate on a second surface opposite to the first surface, and including a plurality of second protrusions.

In an embodiment, the first protrusions may be on at least one side of the first insulating portion along an extending direction of the electrode tab, and the second protrusions may be on at least one side of the second insulating portion along the extending direction of the electrode tab.

In an embodiment, the first insulating portion and the second insulating portion may be attached on the electrode substrate and the electrode tab, and the first protrusions and the second protrusions may cross each other.

In an embodiment, the first insulating portion and the second insulating portion may be attached on the electrode substrate and the electrode tab, and the first protrusions and the second protrusions may be aligned with each other.

In an embodiment, the electrode substrate and the electrode tab may be coupled to each other by welding.

In an embodiment, the first protrusions and the second protrusions may have a semicircular, triangular, rectangular, or trapezoidal shape.

In an embodiment, the first protrusions and the second protrusions may protrude in a direction perpendicular to an extending direction of the electrode tab.

In an embodiment, the first insulating portion may further include a plurality of first concave portions, and the first protrusions may include a first-first protrusion, a second-first protrusion, and a third-first protrusion. The first concave portions may include a first-first concave portion and a second-first concave portion, the first-first concave portion may be located between the first-first protrusion and the second-first protrusion, and the second-first concave portion may be located between the second-first protrusion and the third-first protrusion.

In an embodiment, the first insulating portion may include a first side that may be flat along an extending direction of the electrode tab, and a second side that may be flat opposite to the first side, and the first protrusions may be located on the first side and the second side.

In an embodiment, the first insulating portion may include a first side that may be flat along an extending direction of the electrode tab, and a second side that may be flat opposite to the first side, and the first protrusions may be located on the first side or the second side, only.

In an embodiment, the first protrusions may be symmetrically located on the first side and the second side.

In an embodiment, the first protrusions may be asymmetrically located on the first side and the second side.

In an embodiment, the first insulating portion may include a first side and a second side that may be flat along an extending direction of the electrode tab, and the first protrusions may be located on the first side but not on the second side.

In an embodiment, the first protrusions may be continuously located on the first side and the first side may not be exposed.

In an embodiment, the first protrusions may be spaced from each other along the first side and the first side may be exposed.

In an embodiment, a minimum width of the first insulating portion may be broader than a width of the electrode tab.

According to a second aspect of the present disclosure, a method for manufacturing an electrode plate for a battery includes: welding and fixing an electrode substrate and an electrode tab to each other; attaching a first insulating portion on a first surface to cover a region where the electrode substrate and the electrode tab overlap with each other; and attaching a second insulating portion on a second surface opposite to the first surface to cover the region where the electrode substrate and the electrode tab overlap with each other. The first insulating portion includes a plurality of first protrusions, and the second insulating portion includes a plurality of second protrusions.

In an embodiment, the first insulating portion and the second insulating portion may be attached concurrently with each other.

In an embodiment, the attaching of the first insulating portion may include: cutting the first insulating portion to form at least some of the first protrusions; and rotating the first insulating portion so that the first protrusions protrude in a direction perpendicular to an extending direction of the electrode tab.

In an embodiment, the first insulating portion and the second insulating portion may be attached on the electrode substrate and the electrode tab, and the first protrusions and the second protrusions may cross each other.

In an embodiment, the first insulating portion and the second insulating portion may be attached on the electrode substrate and the electrode tab, and the first protrusions and the second protrusions may be aligned with each other.

According to some embodiments of the present disclosure, the occurrence of cracks on the electrode substrate due to the insulating member covering the electrode tab and the electrode substrate may be prevented or substantially prevented.

According to some embodiments of the present disclosure, cracks that may occur on the electrode substrate due to a factor may be prevented or substantially prevented from expanding.

According to some embodiments of the present disclosure, the quality of the electrode plate may be improved.

According to some embodiments of the present disclosure, the occurrence of cracks on the electrode plate may be suppressed by changing the shape of the insulating member (e.g., an existing insulating member) in a process of manufacturing the battery, and thus, the process of manufacturing the battery may be improved without the need for adding separate processes.

However, aspects and features of the present disclosure are not limited to those described above, and other aspects and features not mentioned will be clearly understood by a person skilled in the art from the detailed description, described below.

### BRIEF DESCRIPTION OF DRAWINGS

The following drawings attached to the present specification illustrate embodiments of the present disclosure, and further describe aspects and features of the present disclosure together with the detailed description of the present disclosure. Thus, the present disclosure should not be construed as being limited to the drawings:
FIG. 1 illustrates a longitudinal cross-sectional view showing an example of a battery according to an embodiment of the present disclosure.
FIG. 2 illustrates a perspective view showing an electrode assembly according to an embodiment of the present disclosure.
FIG. 3 is a schematic diagram illustrating a cross section of an electrode plate for a battery according to an embodiment of the present disclosure.
FIG. 4A illustrates a plan view of a portion of the front of an electrode plate according to a comparative example not falling under the protection scope of the present disclosure.
FIG. 4B illustrates a plan view of a portion of the front of an electrode plate according to an embodiment of the present disclosure.
FIG. 5 illustrates a plan view of a portion of the front of an electrode plate according to an embodiment of the present disclosure.
FIG. 6 illustrates a plan view showing an example of an insulating portion according to an embodiment of the present disclosure.
FIG. 7 illustrates a plan view showing an example of an insulating portion according to an embodiment of the present disclosure.
FIG. 8 illustrates a plan view showing an example of an insulating portion according to an embodiment of the present disclosure.
FIG. 9 illustrates a plan view showing an example of an insulating portion according to an embodiment of the present disclosure.
FIG. 10 illustrates a plan view showing an example of an insulating portion according to an embodiment of the present disclosure.
FIG. 11 illustrates a flowchart of a method for manufacturing an electrode plate for a battery according to an embodiment of the present disclosure.

### DETAILED DESCRIPTION

Hereinafter, embodiments of the present disclosure will be described, in detail, with reference to the accompanying drawings. The terms or words used in the present specification and claims are not to be limitedly interpreted as general or dictionary meanings and should be interpreted as meanings and concepts that are consistent with the technical idea of the present disclosure on the basis of the principle that an inventor can be his/her own lexicographer to appropriately define concepts of terms to describe his/her invention in the best way.

The embodiments described in this specification and the configurations shown in the drawings are only some of the embodiments of the present disclosure and do not represent all of the technical aspects, and features of the present disclosure. Accordingly, it should be understood that there may be various equivalents and modifications that can replace or modify the embodiments described herein at the time of filing this application.

It will be understood that when an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc. may be exaggerated for clarity of illustration. The same reference numerals designate the same elements. As used herein, the term "and/or" includes any and all combinations of one or more of the associated listed items. Further, the use of "may" when describing embodiments of the present disclosure relates to "one or more embodiments of the present disclosure." Expressions, such as "at least one of" and "any one of," when preceding a list of elements, modify the entire list of elements and do not modify the individual elements of the list. When phrases such as "at least one of A, B and C, "at least one of A, B or C," "at least one selected from a group of A, B and C," or "at least one selected from among A, B and C" are used to designate a list of elements A, B and C, the phrase may refer to any and all suitable combinations or a subset of A, B and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It will be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein.

References to two compared elements, features, etc. as being "the same" may mean that they are "substantially the same". Thus, the phrase "substantially the same" may include a case having a deviation that is considered low in the art, for example, a deviation of 5% or less. In addition, when a certain parameter is referred to as being uniform in a given region, it may mean that it is uniform in terms of an average.

Throughout the specification, unless otherwise stated, each element may be singular or plural.

Arranging an arbitrary element "above (or below)" or "on (under)" another element may mean that the arbitrary element may be disposed in contact with the upper (or lower) surface of the element, and another element may also be interposed between the element and the arbitrary element disposed on (or under) the element.

In addition, it will be understood that when a component is referred to as being "linked," "coupled," or "connected" to another component, the elements may be directly "coupled," "linked" or "connected" to each other, or another component may be "interposed" between the components".

Throughout the specification, when "A and/or B" is stated, it means A, B or A and B, unless otherwise stated. That is, "and/or" includes any or all combinations of a plurality of items enumerated. When "C to D" is stated, it means C or more and D or less, unless otherwise specified.

The terms used in the present specification are for describing embodiments of the present disclosure and are not intended to limit the present disclosure.

In the present disclosure, the sizes and relative sizes of layers and regions shown in the drawings may be exaggerated for convenience of illustration. In other words, the sizes shown in the drawings are provided for convenience of illustration, and the present disclosure is not limited thereto. In addition, the same reference numerals denote the same elements throughout the specification.

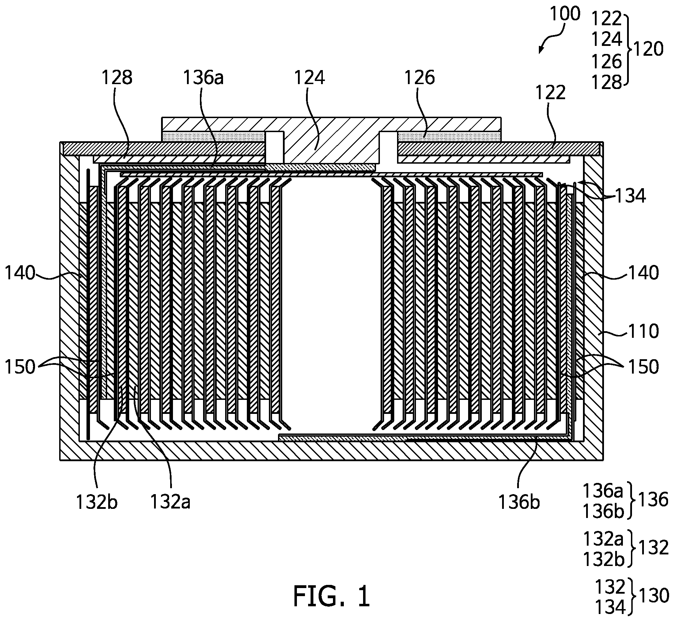

FIG. 1 illustrates a longitudinal cross-sectional view showing an example of a battery according to an embodiment of the present disclosure. Referring to FIG. 1, a battery 100 may include an electrode assembly 130, a case 110, a cap assembly 120, and an insulating portion 150.

The battery 100 may be a coin-kind or a button-kind of battery. For example, the battery 100 may have a cylindrical shape. However, the present disclosure is not limited thereto, and the battery 100 may be a cylindrical-kind, a prismatic-kind, or a pouch-kind of battery. In an example, the battery 100 may be a secondary battery capable of charging and discharging.

The electrode assembly 130 may include an electrode plate 132 and a separator 134. An electrode tab 136 may be connected to the electrode plate 132. The electrode plate 132 may include a first electrode plate 132a and a second electrode plate 132b. In more detail, the electrode assembly 130 may be formed by winding the separator 134 disposed between the first electrode plate 132a and the second electrode plate 132b. The electrode assembly 130 may be wound to form a core portion, and may include a through-hole in the core portion. As another example, the electrode assembly 130 may be formed by laminating unit cells, in which the separator 134 is disposed between the first electrode plate 132a and the second electrode plate 132b, that are stacked. However, the present disclosure is not limited thereto, and the winding or stacking method of the electrode assembly 130 may be variously modified as needed or desired.

The first electrode plate 132a may include a first substrate, and a first active material coating layer located on the first substrate. A first electrode tab 136a of the electrode tab 136 may be joined to or formed integrally with a first uncoated portion where the first active material coating layer is not positioned in the first substrate, and may extend outward. The first electrode tab 136a may be electrically connected to a terminal plate 124 of the cap assembly 120.

The second electrode plate 132b may include a second substrate, and a second active material coating layer located on the second substrate. A second electrode tab 136b of the electrode tab 136 may be joined to or formed integrally with a second uncoated portion where the second active material coating layer is not positioned in the second substrate, and may extend outward. The second electrode tab 136b may be electrically connected to the case 110. The first electrode tab 136a and the second electrode tab 136b may extend in opposite directions from each other. In another example, the first electrode tab 136a and the second electrode tab 136b may extend in the same direction as each other.

In an embodiment, each of the first electrode tab 136a and the second electrode tab 136b may be covered with a cover tape. The cover tape may include an insulating material. The insulating material may provide an electrical insulation to prevent or substantially prevent a current from passing therethrough. The cover tape may prevent a short circuit from occurring in the first electrode tab 136a and the second electrode tab 136b.

The first electrode plate 132a may function as a positive electrode plate. In this case, the first substrate may include, for example, an aluminum foil, and the first active material coating layer may include, for example, a transition metal oxide (e.g., LiCoO₂, LiNiO₂, LiMn₂O₄, or the like). The second electrode plate 132b may function as a negative electrode plate. In this case, the second substrate may include, for example, a copper foil or a nickel foil, and the second active material coating layer may include, for example, graphite or carbon. However, the present disclosure is not limited to the materials of the electrode substrate and the active material coating layer described above. As another example, the first electrode plate 132a may function as a negative electrode plate, and the second electrode plate 132b may function as a positive electrode plate.

In some embodiments, the first electrode tab 136a may be a positive electrode tab, and the second electrode tab 136b may be a negative electrode tab. In this case, the positive electrode tab may include an aluminum material, and the negative electrode tab may include a copper material or a nickel material.

The separator 134 may function to prevent a short circuit from occurring between the first electrode plate 132a and the second electrode plate 132b, while allowing the movement of ions (e.g., lithium ions). The separator 134 may include (e.g., may be composed of), for example, a polyethylene (PE) film, a polypropylene (PP) film, a polyethylene-polypropylene film, or the like, but the present disclosure is not limited thereto.

Referring to FIG. 1, the first electrode tab 136a connected to the first electrode plate 132a may be formed on one side of the electrode assembly 130. The second electrode tab 136b connected to the second electrode plate 132b may be formed on another side (e.g., an opposite side) of the electrode assembly 130. However, the present disclosure is not limited thereto. For example, the first electrode tab 136a and the second electrode tab 136b may be formed on one side (e.g., the same side) of the electrode assembly 130.

The battery 100 may include the electrode assembly 130, and an outer portion that accommodates the electrode assembly 130. The outer portion of the battery 100 may include the case 110 and the cap assembly 120, and may configure the external appearance of the battery 100.

The case 110 may accommodate the electrode assembly 130 and an electrolyte. The case 110 may include an approximately cylindrical sidewall portion, and a bottom portion connected to a side or an end (e.g., one side or one end) of the sidewall portion. However, the present disclosure is not limited thereto, and the case 110 may have various suitable shapes, such as a prismatic shape or a pouch shape. In addition, in the case of the can kind, the case 110 may include (e.g., may be composed of) a metal, such as aluminum, an aluminum alloy, or a nickel-plated steel. In the case of the pouch kind, the case 110 may include (e.g., may be composed of) a laminate film including a metal, a polymer, a plastic, and/or the like.

The electrode assembly 130 may be inserted into the case 110 through an opening formed in one side of the case 110. Thereafter, the opening of the case 110 may be closed by the cap assembly 120. The cap assembly 120 may be joined to (e.g., connected to, coupled to, or attached to) the one side of the case 110. For example, the cap assembly 120 may be primarily joined to and temporarily fixed to one end of the sidewall portion of the case 110. Thereafter, a region where the case 110 and the cap assembly 120 come into contact with each other may be welded, so that the opening of the case 110 may be finally sealed by the cap assembly 120.

Referring to FIG. 1, the separator 134 of the electrode assembly 130 may be longer in the height direction of the electrode assembly 130 than the first electrode plate 132a and the second electrode plate 132b. Due to the electrode substrate wrapping around the outer circumference of the electrode assembly 130, one end of the separator 134 of the electrode assembly 130 may be spaced apart from the welding region between the cap assembly 120 and the case 110. Similarly, due to the electrode substrate, the first electrode tab 136a of the electrode assembly 130 may be spaced apart from the welding region between the cap assembly 120 and the case 110. As such, the separator 134 may not be caught between the case 110 and the cap assembly 120, and may not be damaged from the welding in the welding region between the cap assembly 120 and the case 110. In addition, it may be possible to prevent a short circuit from occurring due to a damage to the first electrode tab 136a that may occur from the welding performed in the welding region between the cap assembly 120 and the case 110.

The cap assembly 120 may include a cap plate 122, an insulating layer 126, the terminal plate 124, and an insulating member 128. The cap plate 122 may cover the opening of the case 110. The cap plate 122 may be joined to (e.g., connected to, coupled to, or attached to) the side surface of the case 110 corresponding to the opening.

An insertion groove may be formed in the cap plate 122. In more detail, the insertion groove may be formed at the center of the cap plate 122. The terminal plate 124 (e.g., an insertion portion of the terminal plate 124) may be inserted into the insertion groove, so that the terminal plate 124 may be joined to (e.g., connected to, coupled to, or attached to) the cap plate 122. The terminal plate 124 may include a body portion, and the insertion portion protruding from the body portion. The insertion portion of the terminal plate 124 may be inserted into the insertion groove of the cap plate 122. In addition, the insertion portion of the terminal plate 124 may be connected to be in contact with the first electrode tab 136a. Referring to FIG. 1, the cap assembly 120 including the terminal plate 124 may be joined to (e.g., connected to, coupled to, or attached to) the case 110, so that the insertion portion faces the electrode assembly 130.

The insulating layer 126 may be disposed between the terminal plate 124 and the cap plate 122. The insulating layer 126 may have an adhesive strength, and thus, may join (e.g., may connect, couple, or attach) the terminal plate 124 to the cap plate 122. The insulating layer 126 may include (e.g., may be composed of) an insulating material, and may electrically insulate the terminal plate 124 and the cap plate 122 from each other.

In an embodiment, the insulating member 128 may be disposed on the bottom surface of the cap plate 122. The top surface of the cap plate 122 may face the body portion of the terminal plate 124, and the bottom surface of the cap plate 122 may face the electrode assembly 130. The insulating member 128 may include (e.g., may be composed of) an insulating material, and may insulate between the cap plate 122 and the electrode assembly 130, or between the cap plate 122 and the first electrode tab 136a.

In some embodiments, as illustrated in FIG. 1, the outermost portion of the electrode assembly 130 may be finished (e.g., may be covered) with the second electrode plate 132b. In more detail, the outermost portion of the electrode assembly 130 may be finished (e.g., may be covered) with the second electrode plate 132b, and may be finished (e.g., may be covered) with the second substrate or the uncoated portion without a second electrode active material coating layer. The second electrode plate 132b may be a negative electrode plate. In some embodiments, a metal foil, such as a copper foil or a nickel foil, in the second electrode plate 132b may be wound around (e.g., a periphery of) the outermost portion of the electrode assembly 130, so that the metal foil may be wrapped with a sealing tape 140, and may be in close contact with the sidewall portion of the case 110.

In an embodiment, the electrode assembly 130 may include the sealing tape 140 that wraps (e.g., around a periphery of) at least a portion of the outermost circumference of the electrode assembly 130. The sealing tape 140 may fix the wound electrode assembly 130. For example, in the electrode assembly 130, the winding of the first electrode plate 132a, the second electrode plate 132b, and the separator 134 may be maintained due to the sealing tape 140 without being released (e.g., without being unwound). For example, the sealing tape 140 may have an adhesive strength, and may be joined to (e.g., connected to, coupled to, or attached to) at least a portion of the outermost circumference of the electrode assembly 130. The sealing tape 140 may include an insulating material. For example, the sealing tape 140 may include at least one of polyimides (PI), polyethylene (PE), or polystyrene (PS).

In an embodiment, the first electrode tab 136a may be bent under the terminal plate 122 within the case 110 in which the electrode assembly 130 is accommodated, and to which the cap assembly 120 is joined. The second electrode tab 136b may be bent above the bottom of the case 110 within the case 110. In some embodiments, the first electrode tab 136a of the electrode assembly 130 may be connected to the terminal plate 124, and thus, the terminal plate 124 may operate as the first electrode. The second electrode tab 136b of the electrode assembly 130 may be connected to the bottom of the case 110, and thus, the case 110 may operate as the second electrode. However, the reverse thereof may also be possible. The connection may be made by welding.

The first substrate and the first electrode tab 136a on which the first active material coating layer is not positioned in the electrode plate 132 may be fixed to each other by welding. The kind of welding may be ultrasonic welding, laser welding, or the like, and may depend on the kind of battery. Therefore, the electrode substrate and the electrode tab 136 may overlap with each other in some regions. In order to insulate the region where the electrode substrate and the electrode tab 136 are welded to each other (hereinafter, referred to as a welding portion), the insulating portion 150 may be attached to the welding portion. As used herein, the electrode tab 136 may refer to the first electrode tab 136a or the second electrode tab 136b.

In a case where the electrode substrate and the electrode tab 136 are fixed to each other by welding, welding portions may be formed on a first surface and a second surface opposite to the first surface. For example, the first surface may be the front surface, and the second surface may be the back surface. Accordingly, as illustrated in FIG. 1, the insulating portion 150 may be attached to the first surface or the front surface and the second surface or the back surface of the region where the electrode substrate and the electrode tab 136 overlap with each other, so as to insulate the welding portion.

In an embodiment, the insulating portion 150 may be attached with a larger size than that of at least the welding portion of the electrode substrate and the electrode tab 136, so as to achieve the insulation purpose. Accordingly, the insulating portion 150 may be attached to a length equal to or longer than the length of at least the electrode substrate in the width direction. In a case where the insulating portion 150 is attached to be longer than the length of the electrode substrate in the width direction, a reliability of the insulation may be improved. The width direction of the electrode substrate may refer to the direction of the short side in the unfolded state before the electrode substrate is wound.

Referring to FIG. 1, the insulating portion 150 is shown to be longer than the length of the electrode substrate in the width direction, and is shorter than the length of the electrode tab 136 in the width direction. However, a portion other than the region electrically connected to the bottom of the case 110 or the terminal plate 124 in the electrode tab 136 may be disposed to be wrapped around by the insulating portion 150.

According to an embodiment, the electrolyte may be injected into the inside of the case 110. As such, ions (e.g., lithium ions) generated by an electrochemical reaction in the first electrode plate 132a and the second electrode plate 132b inside the battery 100 may be moved during the charging and discharging. The electrolyte may include a non-aqueous organic electrolyte, which may be a mixture of a lithium salt and a high-purity organic solvent. The electrolyte may include a polymer, or a solid electrolyte including or using a polymer electrolyte.

The insulating portion 150 may include an insulating material so as to achieve the purpose of insulating the welding portion, and may include an adhesive material so as to be more easily fixed to the electrode substrate or the electrode tab 136. For example, the insulating portion 150 may include a substrate and an adhesive layer. The substrate may include polyethylene terephthalate (PET), polyimide (PI), polypropylene (PP), polyethylene (PE), or polystyrene (PS), and the adhesive layer may include a rubber, silicone, or acrylic. Because the insulating portion 150 according to an embodiment may be disposed inside the case 110 to come into contact with the electrolyte as described above, both the substrate and the adhesive layer may include (e.g., may be) suitable materials that do not react with the electrolyte.

In some embodiments, the adhesive material of the insulating portion 150 may be disposed on the surface that comes into contact with the electrode substrate or the electrode tab 136, so as to be more easily fixed to the electrode substrate or the electrode tab 136.

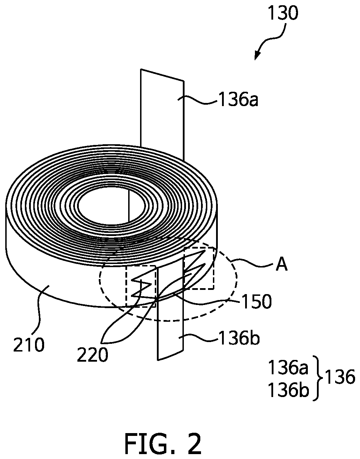

FIG. 2 illustrates a perspective view showing the electrode assembly according to an embodiment of the present disclosure.

In an embodiment, the electrode assembly 130 may have a structure in which a first electrode plate, a second electrode plate, and a separator between the first electrode plate and the second electrode plate are wound together. The outermost portion of the electrode assembly 130 may be finished (e.g., may be covered) with an electrode substrate 210 of a first electrode plate or a second electrode plate, and electrode tabs 136a and 136b may be fixed to the electrode substrate 210 by welding. As used herein, the electrode substrate 210 may be a positive electrode substrate or a negative electrode substrate.

For example, the second electrode tab 136b may be fixed on the electrode substrate 210 of the second electrode plate disposed at the outermost portion of the electrode assembly 130. The first electrode tab 136a may be fixed on the electrode substrate 210 of the first electrode plate disposed at the outermost portion of the electrode assembly 130.

The insulating portion 150 may be attached to a first surface and a second surface opposite to the first surface of the welding portion, so as to cover a portion of the electrode substrate 210 and a portion of the electrode tab 136. For example, the insulating portion 150 may cover the welding portion between the electrode substrate 210 and the electrode tab 136. In FIG. 2, the first surface or the front surface is shown, but the insulating portion 150 may be attached to the second surface or the back surface.

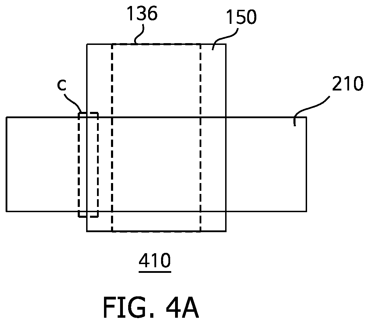

An edge portion of the insulating portion 150 according to a comparative example of a battery electrode plate 410 may be formed as a flat side as shown in FIG. 4A. The edge portion may refer to a portion of the insulating portion 150 that corresponds to a direction approximately parallel to an extension direction of the electrode tab 136 with respect to the end of the insulating portion 150 that is attached on the electrode tab 136 and the electrode substrate 210. In the case of the comparative example of a battery electrode plate 410, because the flat side of the insulating portion 150 overlaps with both the first surface and the second surface of the electrode substrate 210, the electrode substrate 210 may be subjected to overlapping pressure by the flat edge portion of the insulating portion 150. Therefore, cracks may occur due to a stress concentration caused by the overlapping pressure on the electrode substrate.

According to some embodiments, however, as illustrated in FIG. 2, the insulating portion 150 may include a plurality of first protrusions 220 at an edge portion. Because the edge portion is not composed of only flat sides, but includes a plurality of protrusions, the stress that may be caused by the overlapping pressure in the region of the electrode substrate 210 corresponding to the edge portion of the insulating portion 150 may be relieved, thereby preventing or substantially preventing the occurrence of cracks. The positions, the shapes, and the like of the protrusions are described in more detail below.

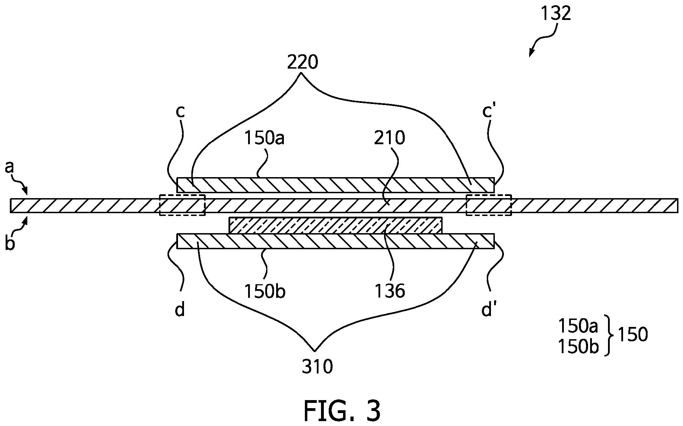

FIG. 3 is a schematic diagram illustrating a cross section of an electrode plate for a battery according to an embodiment of the present disclosure. The dashed box in FIG. 3 indicates a portion where a stress may be concentrated.

As illustrated in FIG. 3, a battery electrode plate 132 may include an electrode substrate 210, an electrode tab 136 overlapping with a portion of the electrode substrate 210, and an insulating portion 150 covering a portion of the electrode tab 136 and a portion of the electrode substrate 210. The insulating portion 150 may include a first insulating portion 150a that covers the electrode tab 136 and a portion of the electrode substrate 210 on a first surface a, and a second insulating portion 150b that covers a portion of the electrode tab 136 and a portion of the electrode substrate 210 on a second surface b opposite to the first surface a. For example, a portion of the electrode tab 136 and a portion of the electrode substrate 210 may refer to a welding portion between the electrode tab 136 and the electrode substrate 210.

The electrode tab 136 may refer to the first electrode tab 136a or the second electrode tab 136b. In addition, the expression "the insulating portion 150 covers a portion of the electrode tab 136 and a portion of the electrode substrate 210" may mean that the adhesive layer of the insulating portion is in contact with the electrode substrate 210 or the electrode tab 136, so that the insulating portion 150 is attached to the electrode substrate 210 or the electrode tab 136. FIG. 3 illustrates a gap between the electrode substrate 210, the electrode tab 136, and the insulating portion 150, but the present disclosure is not limited thereto, and the electrode substrate 210, the electrode tab 136, and the insulating portion 150 may be in contact with each other.

According to an embodiment of the present disclosure, the first insulating portion 150a may include a plurality of first protrusions 220, and the second insulating portion 150b may include a plurality of second protrusions 310. For example, the first protrusions 220 may be formed at an end of the first insulating portion 150a, and the second protrusions 310 may be formed at an end of the second insulating portion 150b. As such, a stress in the region where the ends overlap with each other may be more weakly applied when compared to a case in which the insulating portions where the protrusions are not formed are overlapped and attached. The end may include edge portions c, c', d, and d'.

In an embodiment, the first protrusions 220 may be formed on at least one side surface of the first insulating portion 150a in the extending direction of the electrode tab 136, and the second protrusions 310 may be formed on at least one side surface of the second insulating portion 150b in the extending direction of the electrode tab 136. In other words, projections may be formed at the edge portions of the insulating portion in the following cases: (c, d'), (c', d), (c, d), (c', d'), and (c, c', d, d'). For example, according to some embodiments, the projections may be formed at the edge portions (c, d'), the edge portions (c', d), the edge portions (c, d), the edge portions (c', d'), or the edge portions (c, c', d, d').

In the case of (c, d') and (c', d) according to some embodiments of the present disclosure, the protrusions and the flat sides overlap with each other on both surfaces (a, b) of the electrode substrate, so that a stress due to the overlapping pressure of the first insulating portion 150a and the second insulating portion 150b may be relatively weakly applied to the corresponding portion of the electrode substrate 210.

In the case of (c, d), (c', d'), and (c, c', d, d') according to some embodiments of the present disclosure, the first protrusions 220 and the second protrusions 310 of the insulating portion 150 overlap with each other on both surfaces, or in other words, on the first surface a and the second surface b of the electrode substrate 210. In a case where the protrusions overlap with each other on both surfaces, or in other words, on the first surface a and the second surface b, a stress due to the overlapping pressure of the first insulating portion 150a and the second insulating portion 150b on the portion of the electrode substrate 210 corresponding to the edge portion of the insulating portion 150 may be weakly applied when compared to the above.

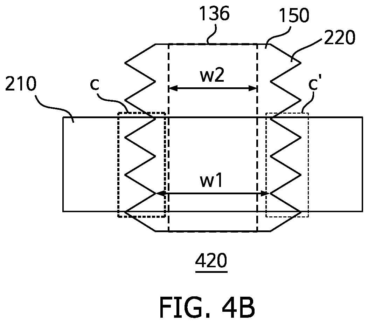

FIG. 4B illustrates a plan view of a portion of the front of an electrode plate according to an embodiment of the present disclosure. FIG. 4B is an enlarged plan view of the detail region A (dashed) of FIG. 2. In FIG. 4B, the first insulating portion and the first protrusions 220 on the front surface are shown for convenience of illustration, but it should be understood that the second insulating portion and the second protrusions may also be formed on the back surface. In addition, although the insulating portion 150 is illustrated as covering the entire upper end of the electrode tab 136, at least a portion of the upper end of the electrode tab 136 may not be covered with the insulating portion 150 in order to connect the electrode tab 136 to, for example, the terminal plate (e.g., the terminal plate 124 of FIG. 1). A case where the first protrusions 220 are formed on opposite side surfaces of the insulating portion 150 in the extending direction of the electrode tab 136 will be described in more detail as an example.

In an embodiment, referring to the example 420 of FIG. 4B, the first protrusions 220 may protrude in a direction perpendicular to or substantially perpendicular to the extending direction of the electrode tab 136. However, the present disclosure is not limited thereto, and the direction in which the protrusions are formed may be variously modified as needed or desired. In addition, the directions in which the protrusions protrude may be the same as or different from each other. As used herein, the protrusion direction of the protrusion means a shortest line formed by a point at which the protrusion deviates (e.g., is located) most externally from the electrode tab and an outer side along the length direction of the electrode tab.

The first protrusions 220 according to an embodiment may be arranged along the longitudinal direction parallel to or approximately parallel to the extension direction of the electrode tab, and each of the protrusions 220 may be formed in a semicircular, triangular, rectangular, or trapezoidal shape. As another example, the protrusions 220 may be formed in different shapes from each other. In FIGS. 4B, 5, 7, 8, 9, and 10, a case where each of the protrusions 220 is a triangle is illustrated as a representative example.

The first insulating portion (e.g., the first insulating portion 150a of FIG. 3) and the second insulating portion (e.g., the second insulating portion 150b of FIG. 3) according to an embodiment of the present disclosure may be attached on the electrode substrate 210 and the electrode tab 136, so that the first protrusions 220 and the second protrusions (e.g., the second protrusions 310 of FIG. 3) are aligned with one another as illustrated in FIG. 4B. In this case, compared to the example 410 where the flat side of the edge portion c overlap on both surfaces with each other, a stress applied to the portion corresponding to the edge portion c' of the electrode substrate according to an embodiment may be weaker.

In addition, in the comparative example 410 of Fig 4A, in a case where cracks occur in a partial region of the electrode substrate 210 corresponding to the edge portion c due to a factor, the cracks occurring in the partial region may propagate along the flat side of the edge portion c, causing the cracks to expand. On the other hand, in the example 420 of the electrode plate according to an embodiment, shown in Fig 4B, in which the insulating portion is attached on both surfaces so that the first protrusions and the second protrusions are aligned with each other, cracks occurring in the partial region as described above may not propagate due to the protrusions.

The insulating portion 150 may be attached to completely cover the welding portion between the electrode substrate and the electrode tab. Accordingly, the insulating portion may insulate the welding portion. In an embodiment, a minimum width w1 of the first insulating portion 220 may be broader than a width w2 of the electrode tab 136.

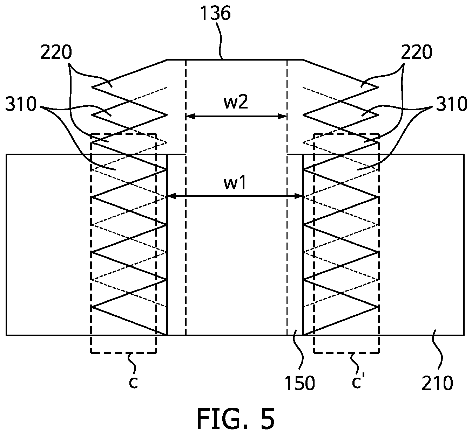

FIG. 5 illustrates a plan view of a portion of the front of an electrode plate according to an embodiment of the present disclosure. As described above with reference to FIG. 3, in FIG. 5, it should be understood that the first protrusions 220 and the second protrusions 310 are arranged on the first surface a and the second surface b, respectively.

Referring to FIG. 5, the first insulating portion and the second insulating portion according to an embodiment may be attached on the electrode substrate 210 and the electrode tab 136, so that the first protrusions 220 and the second protrusions 310 cross each other. In this case, compared to some of the embodiments described above, the non-overlapping region between the surfaces of the protrusions may be increased, so that a stress applied to the portion of the electrode substrate 210 corresponding to the edge portions c and c' may be further alleviated. In addition, compared to some of the embodiments described above, the crack occurrence prevention and/or crack propagation prevention effects may be enhanced.

In an embodiment, a minimum width w1 of the first insulating portion may be broader (longer) than a width w2 of the electrode tab 136, as illustrated in FIG. 5. As such, the welding portion may be insulated.

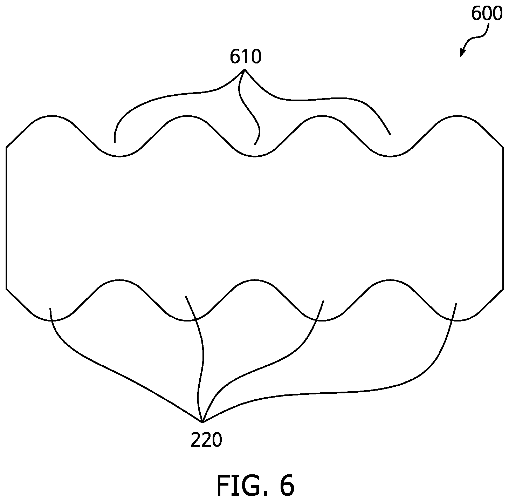

FIG. 6 illustrates a plan view showing an example of an insulating portion according to an embodiment of the present disclosure. A first insulating portion is illustrated as a representative example, but the second insulating portion may have the same or substantially the same structure.

Referring to FIG. 6, a first insulating portion 600 according to an embodiment may include a plurality of first concave portions 610. In addition, the first concave portions 610 may be arranged alternately with the first protrusions 220. For example, the first protrusions 220 may include a first-first protrusion, a first-second protrusion, and a first-third protrusion. The first concave portions 610 may include a first-first concave portion and a second-first concave portion. The first-first concave portion may be formed between the first-first protrusion and the second-first protrusion, and the second-first concave portion may be formed between the second-first protrusion and the third-first protrusion. The number, the size, and the like of protrusions and concave portions according to embodiments of the present disclosure may be variously modified as needed or desired.

In an embodiment, as illustrated in FIG. 6, boundary lines of the first protrusions 220 and/or the first concave portions 610 may have a curvature (e.g., a particular or predetermined curvature). In this case, a propagation or an expansion of cracks that may have occurred along the boundary lines may be prevented or reduced when compared to a case where the boundary lines are in the form of a straight line.

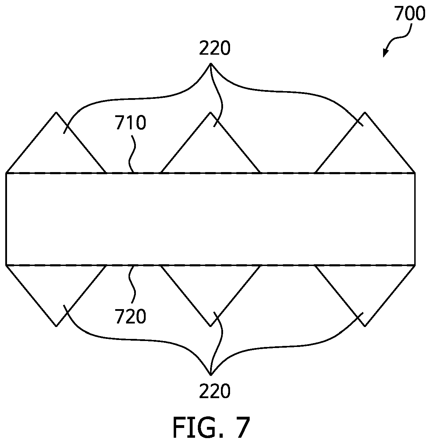

FIG. 7 illustrates a plan view showing an example of an insulating portion according to an embodiment of the present disclosure.

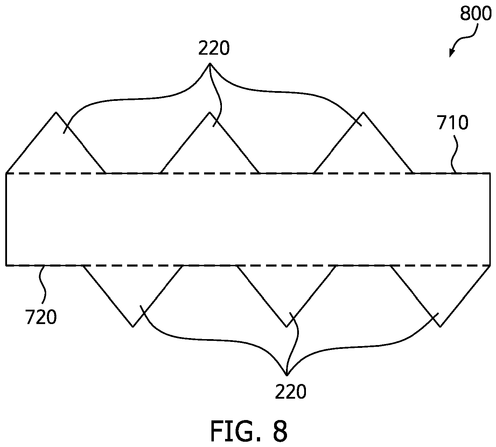

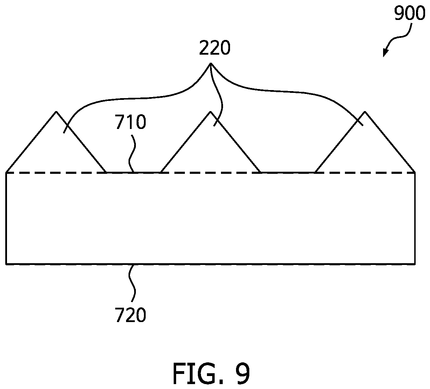

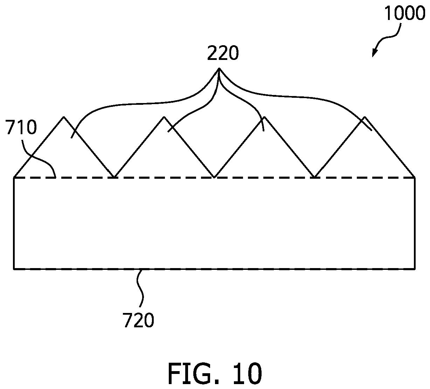

The insulating portion according to some embodiments may include a first flat side 710 extending along the extending direction of the electrode tab (e.g., the electrode tab 136 of FIG. 4), and a second flat side 720 opposite to the first side 710. In some embodiments described below (e.g., an insulating portion 800 of FIG. 8, an insulating portion 900 of FIG. 9, and an insulating portion 1000 of FIG. 10), the definitions of the first side 710 and the second side 720 may not be repeated.

A plurality of first protrusions 220 included in the first insulating portion 700 according to an embodiment may be formed on the first side 710 and the second side 720. Referring to FIG. 7, the first protrusions 220 may be spaced apart from each other on the first side 710 of the first insulating portion 700 according to an embodiment, and thus, a portion of the first side 710 may be exposed. As another example or in addition, the first protrusions 220 may be spaced apart from each other on the second side 720, and thus, a portion of the second side 720 may be exposed. In this case, the side exposed from the second insulating portion (e.g., the second insulating portion 150b of FIG. 2) covering the electrode substrate and the electrode tab on the surface opposite to the first insulating portion 700 may be attached, so as not to overlap with at least one region of the first side 710 and the second side 720 of the first insulating portion 700. This may alleviate a stress concentration in at least one region.

Referring to FIG. 7, the first protrusions 220 of the first insulating portion 700 according to an embodiment may be symmetrically or substantially symmetrically formed on the first side 710 and the second side 720. For example, the first protrusions 220 may be formed with the same shape and arrangement on the first side 710 and the second side 720 with respect to the longitudinal direction of the first insulating portion 700.

FIG. 8 illustrates a plan view showing an example of an insulating portion according to an embodiment of the present disclosure.

A plurality of first protrusions 220 included in a first insulating portion 800 according to an embodiment may be formed on the first side 710 and the second side 720. Referring to FIG. 8, the first protrusions 220 are spaced apart from each other on the first side 710 of the first insulating portion 800 according to an embodiment, and thus, a portion of the first side 710 may be exposed. As another example or in addition, the first protrusions 220 may be spaced apart from each other on the second side 720, and thus, a portion of the second side 720 may be exposed. In addition, as illustrated in FIG. 8, the first protrusions 220 of the first insulating portion 800 according to an embodiment may be formed asymmetrically on the first side 710 and the second side 720. For example, the first protrusions 220 may be formed with different shapes and arrangements on the first side 710 and the second side 720 with respect to the longitudinal direction of the first insulating portion 800. For example, the first protrusions 220 on the first side 710 and the first protrusions 220 on the second side 720 are arranged offset to each other.

FIG. 9 illustrates a plan view showing an example of an insulating portion according to an embodiment of the present disclosure.

Referring to FIG. 9, a plurality of first protrusions 220 of a first insulating portion 900 according to an embodiment may be formed on the first side 710 or the second side 720. For example, the first protrusions 220 may be spaced apart from each other on the first side 710 of the first insulating portion 900, and thus, a portion of the first side 710 may be exposed. In this case, the second side 720 may be exposed along the entire length thereof.

FIG. 10 illustrates a plan view showing an example of an insulating portion according to an embodiment of the present disclosure.

Referring to FIG. 10, a plurality of first protrusions 220 of a first insulating portion 1000 according to an embodiment may be formed on the first side 710 or the second side 720. In addition, the first protrusions 220 may be continuously provided on the first side 710, and thus, the first side 710 may not be exposed.

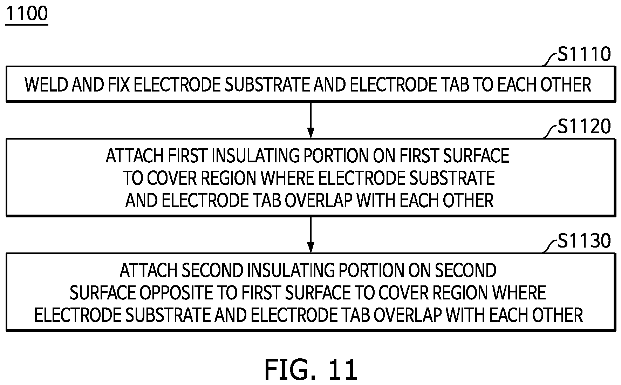

FIG. 11 illustrates a flowchart of a method for manufacturing an electrode plate for a battery according to an embodiment of the present disclosure. Hereafter with reference to FIG. 11, redundant description as those above may not be repeated.

A method for manufacturing an electrode plate 1100 for a battery according to an embodiment of the present disclosure may include welding and fixing an electrode substrate and an electrode tab to each other (S1110), attaching a first insulating portion on a first surface to cover a region where the electrode substrate and the electrode tab overlap with each other (S1120), and attaching a second insulating portion on a second surface opposite to the first surface to cover the region where the electrode substrate and the electrode tab overlap with each other (S1130). In this case, as described above, the first insulating portion may include a plurality of first protrusions, and the second insulating portion may include a plurality of second protrusions.

In an embodiment, the first insulating portion (e.g., the first insulating portion 150a of FIG. 3) and the second insulating portion (e.g., the second insulating portion 150b of FIG. 3) may be attached concurrently or simultaneously. In this case, a degree of adhesion between the first insulating portion and the second insulating portion may be strengthened. In some embodiments, the first insulating portion and the second insulating portion may be completely overlapped with each other, or may be slightly misaligned with each other within an acceptable range.

In an embodiment, the attaching of the first insulating portion (e.g., S1120) may include (e.g. before attaching the first insulating portion) cutting the first insulating portion, so that at least some of the first protrusions are formed, and rotating the first insulating portion, so that the first protrusions formed by the cutting protrude in a direction perpendicular to or substantially perpendicular to the extending direction of the electrode tab (e.g. and then attaching the cut and rotated first insulating portion on a first surface a to cover a region where the electrode substrate and the electrode tab overlap with each other). Because the rotating of the first insulating portion may be applied, the method may be more easily applied to a process of manufacturing the electrode plate transported in a reel kind.

In an embodiment, each protrusion may be formed in a semicircular, triangular, rectangular, or trapezoidal shape. As another example, the protrusions may be formed in different shapes from one another. In an embodiment, for the automation of a cutting process used in the cutting of the first insulating portion so that at least some of the first protrusions are formed, the shape of the cutter may be of one kind so that the shapes of all the protrusions are the same or substantially the same as each other.

The flowchart of FIG. 11 and related description are provided as examples, and the present disclosure is not limited thereto. For example, one or more processes in the flowchart may be added/changed/deleted, the order of one or more processes may be changed, and/or one or more processes may be performed concurrently or simultaneously with each other.

Although the present disclosure has been described above with respect to embodiments thereof, the present disclosure is not limited thereto. Various modifications and variations can be made thereto by those skilled in the art within the scope of the present disclosure and the equivalent scope of the appended claims.

## Claims

1. An electrode plate (132, 132a, 132b, 420) for a battery (100), comprising:
an electrode substrate (210);
an electrode tab (136, 136a, 136b) overlapping with a portion of the electrode substrate (210);
a first insulating portion (150a, 600, 700, 800, 900, 1000) covering a portion of the electrode tab (136, 136a, 136b) and a portion of the electrode substrate (210) on a first surface (a), and comprising a plurality of first protrusions (220); and
a second insulating portion (150b) covering a portion of the electrode tab (136, 136a, 136b) and a portion of the electrode substrate (210) on a second surface (b) opposite to the first surface (a), and comprising a plurality of second protrusions (310).

2. The electrode plate (132, 132a, 132b, 420) as claimed in claim 1, wherein the first protrusions (220) are on at least one side of the first insulating portion (150a, 600, 700, 800, 900, 1000) along an extending direction of the electrode tab (136, 136a, 136b), and
wherein the second protrusions (310) are on at least one side of the second insulating portion (150b) along the extending direction of the electrode tab (136, 136a, 136b).

3. The electrode plate (132, 132a, 132b) as claimed in claim 1 or 2, wherein the first insulating portion (150a, 600, 700, 800, 900, 1000) and the second insulating portion (150b) are attached on the electrode substrate (210) and the electrode tab (136, 136a, 136b), and the first protrusions (220) and the second protrusions (310) cross each other.

4. The electrode plate (132, 132a, 132b) as claimed in claim 1 or 2, wherein the first insulating portion (150a, 600, 700, 800, 900, 1000) and the second insulating portion (150b) are attached on the electrode substrate (210) and the electrode tab (136, 136a, 136b), and the first protrusions (220) and the second protrusions (310) are aligned with each other.

5. The electrode plate (132, 132a, 132b) as claimed in at least one of the preceding claims, wherein the first protrusions (220) and the second protrusions (310) have a semicircular, triangular, rectangular, or trapezoidal shape.

6. The electrode plate (132, 132a, 132b) as claimed in claim 1, wherein the first protrusions (210) and the second protrusions (310) protrude in a direction perpendicular to an extending direction of the electrode tab (136, 136a, 136b).

7. The electrode plate (132, 132a, 132b) as claimed in one of claims 1 to 4, wherein the first insulating portion (600) further comprises a plurality of first concave portions (610),
the first protrusions (220) comprise a first-first protrusion, a second-first protrusion, and a third-first protrusion,
the first concave portions (610) comprise a first-first concave portion and a second-first concave portion,
the first-first concave portion is located between the first-first protrusion and the second-first protrusion, and
the second-first concave portion is located between the second-first protrusion and the third-first protrusion.

8. The electrode plate (132, 132a, 132b) as claimed in one of claims 1 to 5, wherein the first insulating portion (150a, 700, 800) comprises a first side (710) that is flat along an extending direction of the electrode tab (136, 136a, 136b), and a second side (720) that is flat opposite to the first side (710), and
wherein the first protrusions (220) are located on the first side (710) and/or the second side (720).

9. The electrode plate (132, 132a, 132b) as claimed in claim 8, wherein the first protrusions (220) are symmetrically located on the first side (710) and the second side (720).

10. The electrode plate (132, 132a, 132b) as claimed in claim 8, wherein the first protrusions (220) are asymmetrically located on the first side (710) and the second side (720).

11. The electrode plate (132, 132a, 132b) as claimed in claim 8, wherein the first protrusions (220) are continuously located on the first side (710) and the first side (710) is not exposed.

12. The electrode plate (132, 132a, 132b) as claimed in one of claims 8 to 10, wherein the first protrusions (220) are spaced from each other along the first side (710) and the first side (710) is exposed.

13. The electrode plate (132, 132a, 132b) as claimed in one of the preceding claims, wherein a minimum width (w1) of the first insulating portion (150, 150a, 600, 700, 800, 900, 1000) is broader than a width (w2) of the electrode tab (136, 136a, 136b).

14. A method for manufacturing an electrode plate (132, 132a, 132b) for a battery (100), the method comprising:
welding and fixing an electrode substrate (210) and an electrode tab (136, 136a, 136b) to each other;
attaching a first insulating portion (150a, 600, 700, 800, 900, 1000) on a first surface (a) to cover a region where the electrode substrate (210) and the electrode tab (136, 136a, 136b) overlap with each other; and
attaching a second insulating portion (150b) on a second surface (b) opposite to the first surface (a) to cover the region where the electrode substrate (210) and the electrode tab (136, 136a, 136b) overlap with each other,
wherein the first insulating portion (150a, 600, 700, 800, 900, 1000) comprises a plurality of first protrusions (220), and
wherein the second insulating portion (150b) comprises a plurality of second protrusions (310).

15. The method as claimed in claim 14, wherein the attaching of the first insulating portion (150a, 600, 700, 800, 900, 1000) comprises:
cutting the first insulating portion (150a, 600, 700, 800, 900, 1000) to form at least some of the first protrusions (220); and
rotating the first insulating portion (150a 600, 700, 800, 900, 1000) so that the first protrusions (220) protrude in a direction perpendicular to an extending direction of the electrode tab (136, 136a, 136b).
